# EUROPEAN PATENT SPECIFICATION

(11) **EP 3 122 802 B1**
(45) Date of publication and mention of the grant of the patent: **28.06.2023**
(21) Application number: 15712866.1
(22) Date of filing: 24.03.2015
(51) Int. Cl.: C08J 3/12, C08L 97/02, C08J 3/22, C08K 3/26, C08K 3/22, C08L 23/06, C08L 23/12

(54) **AN ADDITIVE FOR PLASTICS COMPRISING VEGETAL FIBER**
ADDITIV FÜR KUNSTSTOFFE MIT PFLANZENFASERN
ADDITIF POUR PLASTIQUES COMPRENANT DES FIBRES VÉGÉTALES

(30) Priority: 25.03.2014 EP 14161431
(43) Date of publication of application: 01.02.2017
(73) Proprietor: Ganduxé, Alejandro, lban, 08402 Granollers (ES)
(72) Inventor: Ganduxé, Alejandro, lban, 08402 Granollers (ES)
(74) Representative: ZBM Patents - Zea, Barlocci & Markvardsen
(86) International application number: PCT/EP2015/056230
(87) International publication number: WO 2015/144690

(56) References cited:
- EP-A1- 0 976 790
- WO-A1-2012/058745
- US-A1- 2009 036 566
- DATABASE WPI Week 201431 Thomson Scientific, London, GB; AN 2014-E92982 XP002729903, -& CN 103 525 110 A (GUANGDONG RES INST PETROCHEMICAL IND) 22 January 2014 (2014-01-22)

## Description

The present invention relates to the field of additives useful in several products, in particular for the production of plastic composites. The invention also relates to the field of waste material derived from agricultural activities.

### BACKGROUND ART

Accumulation of plastic waste has become a serious problem throughout the world. It is for this reason that a new generation of totally or partially biodegradable plastics emerged in the last decades. In the same way, those products and materials traditionally manufactured from plastic also evolved to more environmentally friendly products. This has been done by substituting traditional plastic for composite materials including high amounts of other components that, far from compromising the properties of the material, avoid the use of great amounts of plastics. Examples of these other components to be mixed with plastics include starch, other natural fibers from plants, such as rice husk, etc.

An example of these fillers for composite materials is disclosed in the document WO0042116 (CONTRACT RESEARCH & DEVELOPMENT, SDN), wherein a filler consisting in carbonized or fresh rice husk is used in the manufacture of composite materials comprising plastics (thermoplastics) and/or rubber. The document discloses final products and methods for manufacturing them, in which the rice husk and other components (calcium carbonate, silica, catalysts, etc.) are mixed with the plastic and/or rubber. The document aims to improve the properties of the composite materials, such as the antistatic, flame retardant, accelerator, plasticizer, blowing and/or other physical or mechanical characteristics. When fresh rice husk is used, it has to be previously milled to a determined particle size in function of the plastics or rubber with which is going to be mixed, and also thinking in the final usage of this plastic or rubber. According to this document, preferred fillers are those using carbonized rice husk. The document also exemplifies different final composite products (containing rubber or other plastics), which are obtained with complex processes and using different compounds accompanying the cereal husk depending on the final plastic or rubber to be processed. The composites obtained as disclosed in WO0042116 imply the disadvantage that if they are derived from fresh husk, they comprise a high humidity. Humidity is a drawback not only in the final product but even during processing. Moreover, a different amount of rice husk has to be used depending on the industry's requirement.

Other examples of additivated plastics are disclosed in patent application US2009036566. This document discloses a composite comprising a lignocellulosic material, which can be corn stalk, rice husk, starch, etc.; a polymer binder; a compatibilizer and a processing aid. The polymer binder is itself a polymer plastic selected, among others, from polyethylene, polystyrene, polyvinyl chloride, etc. This composite is used in the manufacturing of injected molded products, such as sheets or three-dimension products. Also the document US 6172144 discloses a thermoplastic molding that comprises rice hull material and a thermoplastic resin.

In the same way, in the document WO2012058745 there are disclosed extruded products derived from a moisture comprising 40 to 75 weight % of rice husks, 0.3 to 3 weight % of a coupling agent, 2 to 5 weight % of a lubricant such as paraffin wax, or oxidized polyethylene wax, and 1 to 5 weight % of a plasticizer, the balance a thermoplastic polymer, such as polyolefin plastic, preferably a recycled plastic, comprising about 25 to 50 weight % of thermoplastic polyolefin. The thermoplastic polyolefin, typically recycled thermoplastic bottles, may be high density polyethylene, low density polyethylene, linear low-density polyethylene, homopolymer polypropylene, copolymer polypropylene, or combinations thereof. The ground rice husks, thermoplastic polyolefins, coupling agent, lubricant and plasticizer are blended together, heated to a softening and melting temperature of the thermoplastic polyolefin, typically 300 ° - 400 °F (150-200 °C), and extruded through an extrusion die having the desired product profile. This document proposes the use of light-weight reinforcing rod, wire or sheet of a fiber-reinforced polymer such as glass-or graphite-reinforced plastic to the composition of the invention adds tensile strength and enhanced dimensional stability to the resulting plastic-containing composite product for structural reinforcement of building products. This glass-or graphite-reinforced plastic is placed in particular positions for reinforcing building blocks made from the material to be extruded. The document shows ended plastic-composite products obtained from a mixture including yet the desired plastic, which mixture will be then extruded to form a rigid panel.

All the processes disclosed in these documents include as raw material the thermoplastics (or other plastic types) and have to be further processed by means of extruders or injection devices. With this raw material including a particular type of plastic, the final user has to process this material at least at the temperature of the plastic included in the raw material, thus implying extra energetically costs. Moreover, the presence of these plastics or plasticizers make them not versatile in the sense that when they have to be mixed with other plastics, only optimum results are obtained when the same plastic is used. Thus, all these products are useful only for a specific plastic, and the formulation cannot be changed, limiting then the process options. The maximal amounts of vegetal fiber in the prior art additives for plastics are no higher than 50 %, since with this and higher amounts the processing of the additive is complex and implies high energetically costs.

In addition, due to the processes for obtaining these plastics with natural fibers, humidity is usually present in the final product (4-5 %), and they imply high energetic powers with the accompanying high costs. The processes imply high pressures and temperatures.

There is still a need of alternative products that permit reducing plastic consumption to the manufacturers of plastic products of any type, as well as for reducing the residual vegetal fiber of agricultural activities. These products should be manufactured, in addition, by means of efficient and environmentally friendly processes.

### SUMMARY OF THE INVENTION

The inventors found that with the selection of particular ingredients including fresh vegetal fiber, glass particles, waxes, oils and rheological agents with a predetermined proportion, a commodity for any plastic materials could be obtained. This commodity, in form of a powder with a particle size comprised from 1 to 300 µm is a versatile composition, and it allows obtaining a universal additive for plastic materials (i.e., thermoplastics).

Thus, in a first aspect, the invention relates to a powder composition with a particle size comprised from 1 µm to 300 µm, and comprising a mixture of vegetal fiber, at least a non-polar wax, at least an oil comprising phosphatidylcholine, at least one rheological agent, and glass particles, wherein said glass particles are composed of a mixture of spherical and rod shape particles, wherein the percentage by weight of the vegetal fiber in respect of the total of the mixture is comprised from 50.0 % (w/w) to 98.0 % (w/w), and wherein the particle size is determined or measured with a sieve retention method;
wherein the non-polar wax is selected from the paraffin wax, polyethylene wax, rice wax, and mixtures thereof, or from carnauba wax, honeybee wax, crystalline wax, candelilla wax, Fischer-Tropsch wax, polypropylene wax, polytetrafluoroethylene wax, amide wax, and mixtures thereof, said non-polar waxes optionally grafted with maleic anhydride; and
wherein the rheological agent is selected from the group consisting of styrene-butadiene-styrene and ethylene propylene diene monomer, or mixtures thereof, or from the group consisting of styrene-ethylene/butylene -styrene, styrene-butadiene, ethylene-propylene, polybutadiene rubber, polyisoprene, acrylonitrile butadiene rubber, hydrogenated nitrile butadiene, carboxylated styrene-butadiene rubber, styrene-butadiene block copolymer, thermoplastic polyether-ester, styrene butadiene block copolymer, styrene butadiene carboxy block copolymer, polyester urethane, polyacrylate rubber, ethylene-acrylate rubber, bromo isobutylene isoprene, chloro isobutylene isoprene, polychloroprene, chlorosulfonated polyethylene, epichlorohydrin, polyether urethane, perfluorocarbon rubber, fluoronated hydrocarbon, fluoro silicone, fluorocarbon rubber, and mixtures thereof.

The particle size, which is the size of a differentiated particle of the powder, is determined by means of a sieve retention method, which is a method for the direct measure of particle and distribution size. Thus, particle size is measured by a sieving method. According to this sieving method, the material, which particle size and/or distribution of particle sizes is to be measured, is introduced in a sieve comprising circular sieving units (generally with a diameter of 200 mm and a height of 50 mm). Each sieving unit has a particular pore diameter and they are organized from the largest to the smallest one, in such a way each of the sieving units hermetically close to the other in order to avoid loss of material. Sieving units are submitted to vibration for a predetermined time (i.e. 5 minutes) in such a way that the material achieves all the sieving units, and the material is at the end of the test distributed in different fractions along all the sieving units. The sieving units are finally weighted to calculate the weight percentage of each of the fractions. Examples of sieves with appropriate sieving units include the BA 200 N model distributed by Cisa Cedaceria (www.cisa.net). In BA 200 N model the sieving units have a nominal aperture (pore size) of 500, 400, 300, 250, 200, 150, 100 micrometers and the bottom (material at the bottom of the sieve).

Another aspect of the invention is a granulate comprising the powder composition as defined above.

In particular, the inventors have found that using a mixture including glass particles and vegetal fiber with other lubricating and filler ingredients, an additive (in the form of powder or granules) for all plastic types could be obtained. Depending on the final desired properties of the plastic, as well as of the plastic itself, the reduction of the final plastic amount used in the manufacture of a specified article (from building for example) can vary. Advantageously, this additive can be manufactured by means of an environmentally friendly and energetically efficient process, in comparison with the actual processes employed to obtain additives for plastics, said additives including yet a plastic material.

Thus, another aspect of the invention is the use of the powder composition or of the granules as defined above as additive for plastics, which means that they can be used in plastic manufacturing processes. The invention then relates to the use of the powder composition or of the granulate composition, both defined above, as additive for plastics. In the present invention this additive (being in form of powder or of granules comprising the powder) is also named particulate additive, since it is an additive for plastics, distributed in the form of "particles" from 1 µm to 300 µm, which particles, in turn, may be processed to form granules.

When used as additive in plastic manufacturing processes, this additive allows reducing the amount of the plastic from which a product is formed without compromising the material properties in terms of resiliency, or the melt flow index. As a way of example, the amount of plastic can be reduced from 3 % to 92 % by weight. The powder or granulate as additive has moreover good lubricating and fluidity properties. This allows simplifying plastic manufacturing extrusion and/or injection processes because the plastic with the additive of the invention lubricates the devices and provides the additivated plastic of a higher fluidity along said devices.

As will be shown in the examples below, the powder or granules of the invention comprise humidity from 0.4 % by weight to 2.0 % by weight due to the process of obtention of the same. These humidity values are quite lower than the humidity of other additives for plastics, always including in its compositions a great percentage of a plastic, and processed by means implying high costs.

If not indicated to the contrary, when humidity levels or values are shown in present invention, they correspond to the ones determined by dry-oven test. Accordingly, there are determined the weight differences between the material weight entering in an oven and the material weight after drying. Said differences correspond to water weight in the entering material.

Further the additive (in form of powder or granules) may be vacuum- packed, thus preserving its properties for a long time.

These powder or granules can thus be mixed with any plastic type and it does not impose any restriction to the nature of the plastic to be mixed with. Contrary, the prior art additives for plastics (generally granules), including yet a percentage of a plastic, are obliged to be mixed with plastics of a particular nature, for example PVC, polyester, high density polyethylene, los density polyethylene, depending on the plastic present in the additive.

In another aspect the invention relates therefore to a plastic composite comprising from 3 % to 92 % by weight of the powder composition or of the granules as defined above, and the balance of plastic.

The composition features of the additive (powder or granules) allow good compatibility (in terms of dispersion and mixture) with any plastic type and from an initial phase. Plastic can then be directly processed as powders or as granules in injectors or extruders, as well as in any equipment commonly used in plastic processing. Indeed, when the plastic with the additive has to be injected or extruded, lower pressures and temperatures are required than the ones if the plastic was not additivated with the additive of the invention.

Another aspect of the invention is a process for preparing a powder composition as defined above, wherein the process comprises the following steps:
a) mixing vegetal fiber with at least a non-polar wax, at least an oil comprising phosphatidylcholine, at least one rheologic agent, and glass particles, wherein said glass particles are composed of a mixture of spherical and rod shape particles, and wherein the percentage by weight of the vegetal fiber in respect of the total of the mixture is comprised from 50 % (w/w) to 98 % (w/w);
(b) agitating the mixture; and
(c) granulating and milling the mixture to obtain a powder with particle size comprised from 1 µm to 300 µm, wherein the particle size is measured with a sieve retention method,

wherein the non-polar wax is selected from the paraffin wax, polyethylene wax, rice wax, and mixtures thereof, or from carnauba wax, honeybee wax, crystalline wax, candelilla wax, Fischer-Tropsch wax, polypropylene wax, polytetrafluoroethylene wax, amide wax, and mixtures thereof, said non-polar waxes optionally grafted with maleic anhydride; and
wherein the rheological agent is selected from the group consisting of styrene-butadiene-styrene and ethylene propylene diene monomer, or mixtures thereof, or from the group consisting of styrene-ethylene/butylene -styrene, styrene-butadiene, ethylene-propylene, polybutadiene rubber, polyisoprene, acrylonitrile butadiene rubber, hydrogenated nitrile butadiene, carboxylated styrene-butadiene rubber, styrene-butadiene block copolymer, thermoplastic polyether-ester, styrene butadiene block copolymer, styrene butadiene carboxy block copolymer, polyester urethane, polyacrylate rubber, ethylene-acrylate rubber, bromo isobutylene isoprene, chloro isobutylene isoprene, polychloroprene, chlorosulphonated polyethylene, epichlorohydrin, polyether urethane, perfluorocarbon rubber, fluoronated hydrocarbon, fluoro silicone, fluorocarbon rubber, and mixtures thereof.

This process implies the additional advantage that it is environmentally friendly, since no heating steps are needed to obtain a powder usable as plastic additive and with a low percentage of humidity.

Indeed, heating occurs naturally when the vegetal fiber is mixed with the rest of the components of the powder composition of the invention. Obviously, common heating means can be applied if needed.

Another aspect of the invention is a process for preparing a plastic composite comprising from 3 % to 92 % by weight of the powder composition or of the granulate composition as defined above, said process comprising carrying out the processes for obtaining the powder or granules, and further mixing the balance of plastic.

### BRIEF DESCRIPTION OF THE DRAWINGS

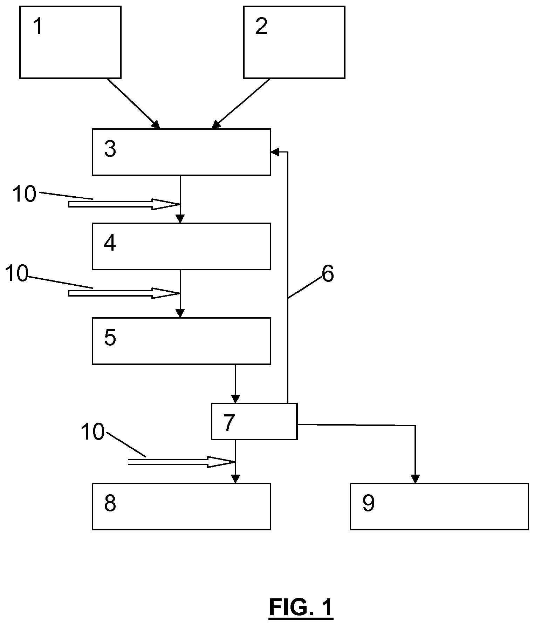

FIG. 1 is a scheme view (flow-chart) of the process of the invention applicable to obtain the particulate additive powder and granules of the invention.

### DETAILED DESCRIPTION OF THE INVENTION

The following definitions are included with the aim of aiding understanding of the invention.

The term "vegetable fiber" is to be understood as having the common meaning and including arrangements of cellulose, often with lignin: examples include cotton, hemp, jute, flax, ramie, sisal, cereal husk and bagasse.

For the expression "granulate" or "granule", used herewith interchangeably, is to be understood as any grain or small particle that can be formed by compacting the powder of the invention alone or in combination with other ingredients. A granular material is a conglomeration of discrete solid particles.

A "plastic composite" is a plastic material for the preparation of plastic pieces or plastic containing pieces, said plastic being made from two or more constituent materials with significantly different physical or chemical properties, that when combined, produce a plastic material with characteristics different from the individual components. The individual components remain separate and distinct within the finished structure. The new material may be preferred for many reasons: common examples include materials which are stronger, lighter or less expensive when compared to traditional materials. The plastic composites include, in particular, wood-plastic composites (WPCs), which are composite materials made of wood fiber/wood flour and thermoplastic(s) (includes PE, PP, PVC etc.). Examples of fibers include cereal fiber derived or coming from cereal husk, such as rice husk. Other examples of fibers include cocoa husk fibers.

As summarized, the present invention relates to a powder composition with a particle size comprised from 1 µm to 300 µm, and comprising a mixture of vegetal fiber, at least a non-polar wax, at least an oil comprising phosphatidylcholine, at least one rheological agent, and glass particles, wherein said glass particles are composed of a mixture of spherical and rod shape particles, and wherein the percentage by weight of the vegetal fiber in respect of the total of the mixture is comprised from 60 % (w/w) to 98 % (w/w) and wherein the particle size is measured with a sieve retention method;
wherein the non-polar wax is selected from the paraffin wax, polyethylene wax, rice wax, and mixtures thereof, or from carnauba wax, honeybee wax, crystalline wax, candelilla wax, Fischer-Tropsch wax, polypropylene wax, polytetrafluoroethylene wax, amide wax, and mixtures thereof, said non-polar waxes optionally grafted with maleic anhydride; and
wherein the rheological agent is selected from the group consisting of styrene-butadiene-styrene and ethylene propylene diene monomer, or mixtures thereof, or from the group consisting of styrene-ethylene/butylene -styrene, styrene-butadiene, ethylene-propylene, polybutadiene rubber, polyisoprene, acrylonitrile butadiene rubber, hydrogenated nitrile butadiene, carboxylated styrene-butadiene rubber, styrene-butadiene block copolymer, thermoplastic polyether-ester, styrene butadiene block copolymer, styrene butadiene carboxy block copolymer, polyester urethane, polyacrylate rubber, ethylene-acrylate rubber, bromo isobutylene isoprene, chloro isobutylene isoprene, polychloroprene, chlorosulphonated polyethylene, epichlorohydrin, polyether urethane, perfluorocarbon rubber, fluoronated hydrocarbon, fluoro silicone, fluorocarbon rubber, and mixtures thereof.

Indeed and in particular, the invention relates to a powder composition comprising vegetal fiber obtainable by a process comprising the following steps:
(a) mixing vegetal fiber with at least a non-polar wax, at least an oil comprising phosphatidylcholine, at least one rheological agent, and glass particles, wherein said glass particles are composed of a mixture of spherical and rod shape particles, and wherein the percentage by weight of the vegetal fiber in respect of the total of the mixture is comprised from 50 % (w/w) to 98 % (w/w);
(b) agitating the mixture; and
(c) granulating and milling the mixture to obtain a powder with particle size comprised from 1 µm to 300 µm, the particle size determined by a sieve retention method,

wherein the non-polar wax is selected from the paraffin wax, polyethylene wax, rice wax, and mixtures thereof, or from carnauba wax, honeybee wax, crystalline wax, candelilla wax, Fischer-Tropsch wax, polypropylene wax, polytetrafluoroethylene wax, amide wax, and mixtures thereof, said non-polar waxes optionally grafted with maleic anhydride; and
wherein the rheological agent is selected from the group consisting of styrene-butadiene-styrene and ethylene propylene diene monomer, or mixtures thereof, or from the group consisting of styrene-ethylene/butylene -styrene, styrene-butadiene, ethylene-propylene, polybutadiene rubber, polyisoprene, acrylonitrile butadiene rubber, hydrogenated nitrile butadiene, carboxylated styrene-butadiene rubber, styrene-butadiene block copolymer, thermoplastic polyether-ester, styrene butadiene block copolymer, styrene butadiene carboxy block copolymer, polyester urethane, polyacrylate rubber, ethylene-acrylate rubber, bromo isobutylene isoprene, chloro isobutylene isoprene, polychloroprene, chlorosulphonated polyethylene, epichlorohydrin, polyether urethane, perfluorocarbon rubber, fluoronated hydrocarbon, fluoro silicone, fluorocarbon rubber, and mixtures thereof.

In another particular embodiment, optionally in combination with any of the embodiments below or above, the vegetal fiber is selected from cereal husk, wood, line, cocoa fiber, jute fiber, bamboo, hazelnut husk, nut husk, and mixtures thereof. In a particular embodiment, the cereal husk is rice husk.

In a particular embodiment, the powder composition includes fresh vegetal fiber (i.e. fresh cereal husk). Using fresh vegetal fiber, such as fresh cereal husk implies no additional costs due to further processing of this material, which in some prior art processes it is carbonized. The fresh husk is the one obtained from the processes of cereal manipulation, wherein after recollection of the cereals, the husk (outer shell or coating of a seed) is separated from the seed.

In a particular embodiment, optionally in combination with any of the embodiments below or above, the powder composition according to the invention, has a particle size comprised from 10 µm to 250 µm. In another particular embodiment, the particle size is comprised from 100 µm to 250 µm. Yet, in a more particular embodiment, the particle size is comprised from 200 µm to 250 µm. Particle size is measured with a sieve retention method, as above exposed.

In a particular embodiment, the distribution of particle sizes of the composition is the one, in which the weight percentage of accumulated sample passed through the sieving units is as indicated below in Table A:

**Table A:**

| Sieving unit diameter pore (µm) | Weight of retained sample (gr) | % of retained sample | % accumulated passed-sample |
|---|---|---|---|
| 500 | 0,6 | 0,24 | 99,76 |
| 400 | 3,6 | 1,46 | 98,30 |
| 300 | 28,0 | 11,19 | 87,10 |
| 250 | 36,5 | 14,60 | 72,51 |
| 200 | 52,3 | 20,92 | 51,58 |
| 150 | 54,7 | 21,90 | 29,68 |
| 100 | 35,3 | 14,11 | 15,57 |
| Bottom | 38,9 | 15,57 | 0,00 |

being the analysis of this particle size distribution performed with 250 grams of the powder composition, and the sieving units disposed in vertical in a sieve device, from larger to smaller pore diameter, and one sieving unit closing to the contiguous one.

Thus, the composition of the invention has in a particular embodiment a particle size distribution wherein at least 70.0 % by weight of the composition comprises particles that have a particle size lower than 250 µm, as illustrated by the % by weight of accumulated sample passing through the sieving unit of 250 µm (which results from the addition of individual % of retained sample in the sieving units with a diameter pore from 200 to bottom of sieve device). Alternatively said, at least a percentage by weight of 14.0 % in relation to the total weight of analyzed sample is retained in the sieving unit of 250 µm.

More particularly, at least 70.0 % by weight of the composition comprises particles that have a particle size lower than 250 µm; at least 50.0 % by weight of the composition comprises particles that have a particle size lower than 200 µm; at least 29.0 % by weight of the composition comprises particles that have a particle size lower than 150 µm; and at least least 15.0 % by weight of the composition comprises particles that have a particle size lower than 100 µm. Distributed as indicated, the powder composition comprises then particles with a particle size from 1 to 300 µm.

In another particular embodiment, optionally in combination with any of the embodiments below or above, the powder composition has a percentage by weight of the vegetal fiber (i.e. cereal husk) in respect of the total of the mixture comprised from 65 % (w/w) to 70 % (w/w). In a more preferred embodiment, the percentage by weight of the vegetal fiber in respect of the total of the mixture is selected from 65 %, 66 %, 67 %, 68 %, 69 %, and 70 %. A percentage by weight of 69 % is preferred.

The rest of the ingredients in the powder composition are comprised according to the following weight percentages in respect of the total of the mixture: from 0.90 % to 23.00% of non-polar wax; from 0.10% to 5.00 % of oil comprising phosphatidylcholine; from 0.06 % to 1.50 % of rheological agent; and from 0.30 % to 8.50 % of glass particles. In the powder composition all the weight percentages achieve 100 % by weight. A part of the desired percentage of vegetal fiber (for example cereal husk, such as rice husk), resting amounts is generally completed by means of filler agents. If no fillers are added, the balance for the 100 % is performed with the weight of cereal husk.

Embodiments of the powder composition of the invention including also filler agents are those in which final weight percentages of any of the ingredients comprised in the powder are as follows: from 50.0 % to 98.0 % of vegetal fiber ( such as rice husk); from 0.90 % to 23.00% of non-polar wax; from 0.10% to 5.00 % of oil comprising phosphatidylcholine; from 0.06 % to 1.50 % of rheological agent; and from 0.30 % to 8.50 % of glass particles; and from 0.40 % to 12.0 % of filler agents (carbonate salts and/or aluminium oxides)

As indicated, among the rheologic agents (synonymous of rheological agents) in the powder composition of the invention, in a particular embodiment the rheologic agent is selected from the group consisting of styrene-butadiene-styrene, ethylene propylene diene monomer, and mixtures thereof. The rheological agent, albeit being a type of rubber supposed no imposition to mixing further the powder composition with a particular type of plastic. Rheological agents refer also herewith to polymeric compounds that give to the mixture the capacity of being malleable and to be processed, not only during production of the powder composition itself, but also when such powder composition is used later as an ingredient in a plastic composite (for example with a thermoplastic). Other examples of polymeric compounds that can be used as rheological agents in the powder composition of the invention are selected from the group consisting of styrene-ethylene/butylene -styrene copolymer (abbreviated SBES according to ISO 1629 Code), styrene-butadiene (SBR), ethylene-propylene (EP), polybutadiene rubber (BR), polyisoprene (IR), acrylonitrile butadiene rubber (NBR), hydrogenated nitrile butadiene (HNBR), carboxylated styrene-butadiene rubber (XSBR), styrene-butadiene block copolymer (YSBR), Thermoplastic Polyether-ester (YBPO), Styrene Butadiene Block Copolymer (YSBR), Styrene Butadiene Carboxy Block Copolymer (YXSBR, polyester urethane (AU), Polyacrylate Rubber (ACM), Ethylene-acrylate Rubber (AEM), Bromo Isobutylene Isoprene (BIIR), Chloro Isobutylene Isoprene (CIIR), Polychloroprene (CR), Chlorosulphonated Polyethylene (CSM), Epichlorohydrin (ECO), Polyether Urethane (EU), Perfluorocarbon Rubber (FFKM), Fluoronated Hydrocarbon (FKM), Fluoro Silicone (FMQ), Fluorocarbon Rubber (FMP, and mixtures thereof. As rheologic agent also any of the above listed polymers or compounds grafted with maleic anhydride, as well as mixtures of these grafted compounds may be used in a particular embodiment. Grafting the polymers with maleic anhydride allows a better coupling with any thermoplastic that can further be mixed with the powder composition of the invention. Indeed, maleic anhydride is known as a coupling agent, creating chemical bonds with substrates, in particular with thermoplastics.

In another particular embodiment, in combination with any of the embodiments below or above, the powder further comprises filler agents. In a particular embodiment the filler agents are selected from the group consisting of carbonate salts. In a particular embodiment the carbonate salts are selected from the group consisting of carbonate salts CaCOs, CaMg(CO₃)₂, an mixtures thereof. In another particular embodiment in combination with any of the embodiments below or above, the powder further comprises as filler agents aluminium oxides. More in particular, aluminium hydroxide (Al(OH)₃).

In a preferred embodiment, and as indicated, the non-polar waxes are selected from paraffin, polyethylene waxes, rice wax, and mixtures thereof. The rice wax (also named rice bran wax) is a product containing aliphatic acids (wax acids) and higher alcohol esters. The aliphatic acids consist of palmitic acid (C₁₆), behenic acid (C₂₂), lignoceric acid (C₂₄), and other higher wax acids. The higher alcohol esters consist mainly of ceryl alcohol (C₂₆) and melissyl alcohol (C₃₀). Rice bran wax also contains constituents such as free fatty acids (palmitic acid), squalene and phospholipids. Waxes are a class of chemical compounds that are plastic (malleable) near ambient temperatures. They are also a type of lipid. Characteristically, they melt above 45 °C (113 °F) to give a low viscosity liquid. Waxes are insoluble in water but soluble in organic, nonpolar solvents. All waxes are organic compounds, both synthetic and naturally occurring. In another particular embodiment, the non-polar waxes are selected from the group consisting of carnauba (or palm) wax, honeybee wax (beeswax), crystalline wax (which contains a higher percentage of isoparaffinic (branched) hydrocarbons and naphthenic hydrocarbons, and it is characterized by the fineness of its crystals in contrast to the larger crystal of paraffin wax), candelilla wax, Fischer-Tropsch wax, polypropylene wax, polytetrafluoroethylene wax, amide wax, and mixtures thereof. In another particular embodiment, optionally in combination with any embodiment above or below, the non-polar wax among those listed above are grafted with maleic anhydride.

The powder according to the invention may be supplied in form of a fine powder having the particle size from 10 µm to 300 µm, and in particular with the particle size distribution indicated above. Alternatively, it can be in form of granules formed from said powder. Or what is the same, the powder of the invention can be one or the single ingredient of a granulate composition. In a particular embodiment the granules are cylindrical bodies with a diameter comprised from 2 mm to 6 mm, and a height comprised from 2 mm to 10 mm, preferably 3.1 mm height. Granules typically have a size range between 0.2 to 4.0 mm depending on their subsequent use.

The invention also relates to a plastic composite comprising from 3 % to 92 % by weight of the powder composition or of the granules made of said powder composition, as defined above. In a particular embodiment, which can be in combination with other embodiments, the plastic is selected from the group consisting of polypropylene, polyethylene, polyvinylchloride, polyurethane, natural or synthetic rubber, polyphosphoesters, polyanhydrides, polycarbonates, polymethacrylate, and mixtures thereof. In a particular embodiment, the plastics have a melting point lower than 250 °C.

In another particular embodiment, in combination with any of the other embodiments of the invention, the invention relates to a powder composition in which the oil mixture comprises phospholipids in liquefied form at room temperature (r.t, from 18 °C to 30 °C), said phospholipids comprising in turn phosphatidylcholine. In a particular embodiment, the proportion of phosphatidylcholine in the oil is from 13 % to 14% by weight of oil mass. Nonlimiting examples of usable oils include soy lecithin, glycerin, rice oil, palm oil, and mixtures thereof. Other suitable oils in another embodiment, optionally in combination with any embodiment above or below, are selected from dimethyladipate, monomethyladipate, Bis(2-ethylhexyl) adipate, dioctyl adipate, and mixtures thereof.

In another particular embodiment, in combination with any of the other embodiments of the invention, the glass particles comprise rod shape particles with a diameter comprised from 35 µm to 45 µm. Glass particles may be of selected from E-glass, R-glass, S-glass, and glass derived from basalt, carbon and aramide. E-glass is an alumino-borosilicate glass with less than 1% w/w alkali oxides. R-glass is an alumino silicate glass without MgO and CaO. S-glass is an alumino silicate glass without CaO but with high MgO content.

Further, in a particular embodiment of the process for preparing a powder as defined above, the process includes a further step on which the mixture of step (a) is heated to a temperature comprised from 100 °C to 200 °C.

In a particular embodiment, in combination with all other above or below embodiments disclosed herein, the process further comprises the step of (d) recycling (or of returning) part of the powder obtained in step (c) and introducing it in step (a).

This recycling or feedback step allows in particular obtaining of a powder with humidity equal or lower than 2.0 %. Even humidity comprised from 0.3 % to 1.0 % by weight of water over the totality of the mixture. Further if the mixture is vacuum-packed the humidity level is reduced to values near to 0.0 %. Low humidity assures that when the powder is used as additive and is mixed with a desired plastic (as a commodity in the process of plastic manufacture or plastic moulding or injection), the water does not interfere neither in the manufacture process nor in the properties of the final plastic product.

In another embodiment, in combination with any of the embodiments above or below, part or total of the powder of step (c) is submitted to a further granulation step or second granulation step. In an embodiment all the powder is granulated. These particular embodiments of the process are those for obtaining the granulate according to the invention. If opted, this further or second granulation step is carried out with a powder with a lower particle size than in the first granulation (prior to the milling), namely with a particle size from 1 to 250 µm. Thus, the powder of step (c) becomes a granulate with different properties than the granules that in step (b) are further milled.

In a particular embodiment of the process of the invention, the vegetal fiber is cereal husk. In a particular embodiment it is rice husk.

When the powder of the invention or the powder further granulated is used for preparing a plastic composite, the process is carried out by application of any of the combinations disclosed in the process for producing the powder or granules, and further mixing the desired amount of plastic.

In a particular embodiment of the process for preparing a plastic composite comprising from 3 % to 92 % by weight of the powder or granules, the balance of plastic is mixed with the additive (in form of powder or granules), and the mixture is melted at a temperature range including the melting point of the plastic, and finally extruded and/or injected. In a more particular embodiment, the additive (powder or granules) is previously dried until humidity under 2 % by weight in the additive is achieved.

Throughout the description and claims the word "comprise" and variations of the word, are not intended to exclude other technical features, additives, components, or steps. Furthermore, the word "comprise" encompasses the case of "consisting of". The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim.

### EXAMPLES

The following examples show the benefits of the additive (powder or granulate composition) of the invention, in terms of changes of the plastic properties, when mixed with thermoplastics in comparison with other additives.

Example 1. Melt flow indexes (MFI) of thermoplastics with the particulate additive of the invention.

MFI assays were performed according to the method as described in the standards ISO 1133. Melt flow index or MFI is a measure of the ease of flow of the melt of a thermoplastic polymer. It is defined as the mass of polymer, in grams, flowing in ten minutes through a capillary of a specific diameter and length by a pressure applied via prescribed alternative gravimetric weights for alternative prescribed temperatures.

The materials employed were:
(A) rice husk: With a humidity of 9 % and a particle size lower than 530 micrometers (from Cámera Arrocera del Montsià - Spain)
(B) Thermoplastics: polypropylene of Alastian PP Alastian^{®} PP EP48-1, and polypropylene of Savic PP@ PH 27
(C) White powder composition (as additive) of the invention comprising in percentage by weight of the total of the powder mixture: 69.89 % of rice husk, 14.34 % of a mixture of rice wax, paraffin and polyethylene wax, 2.62 % of a mixture of soy lecithin, glycerin and rice oil, 0.92 % of a mixture of styrene-butadiene-styrene (SBS) and ethylene propylene diene monomer (EPDM), 6.99 % of a mixture of CaCOs, CaMg(CO₃)₂ and Al(OH)₃ (filler agents), and 5.24 % of E-glass particles comprising spherical and rod shape particles with a diameter of 40 µm. Specific weight of the powder was of 1.474 g/cm3, and the density (measured according to ISO 787-11) was of 1.000 g/cm3. The final humidity of the powder was of 1 % (determined according to ISO 787-2; or by means of dry-oven test as indicated above).

The particle size distribution of the composition, measured according to the sieve retention method in a BA 200 N Sieve model was that disclosed in Table A above. The percentage by weight of the product comprising particles with a particle size lower than 250 µm was of 72.51 %.

Particular composition (% by weight in the powder mixture) corresponds to 15.26 % by weight of rheological agents (styrene-butadiene-styrene (SBS) and ethylene propylene diene monomer (EPDM), 2.62 % of fatty acids (from several of the components of the powder), 0.02 % of Fe₂O₃ (basically from rice husk), 3.31 % of CaO (from fillers and rice husk), 1.92 % of MgO (from fillers and rice husk), 3.29 % of CO₂ (from carbonate fillers basically and from rice husk), 13.31 % of SiO₂ (from glass particles and from rice husk), and 0.82 % of Al₂O₃ (from fillers).

Several mixtures were performed as indicated in Tables 1 and 2 below. The mixtures were prepared using a mixer to get a good homogeneity and plasticization of the materials. Resulting material was introduced in a cutting-mill to get the optimum particle size required to test MFI parameter according to standard ISO 1133.

**Table 1: Mixture of Polypropylene with rice husk with a particle size lower than 530 µm.**

| Table 1 | | |
|---|---|---|
| Alastian PP EP48-1 | Rice husk (particle size < 530 µm) | MFI (200°C/5kg) |
| | | UNE-EN ISO 1133 |
| Parts by weight | Parts by weight | g/10min |
| 100 | 45 | 27,44±2,04 |
| 100 | 65 | 24,44±2,3 |
| 100 | 90 | 18,84±2,54 |
| 100 | 120 | 12,98 |

Results in Table 1 show that the greater the amount of rice husk, the lower the fluidity index (indicated as MFI)

### Test 2 and Table 2

In this test there were compared MFI values of pure polypropylene and of a mixture comprising polypropylene and the powder composition of the invention indicated in (C) above.

Results in Table 2 show that MFI of the polymer (PP) is not altered by the presence even of great amounts of the particulate additive of the invention (powder defined in (C)).

| Table 2 | | |
|---|---|---|
| SABIC^{®} PP PHC27 | Particulate additive of the invention | MFI (200°C/5kg) |
| | | UNE-EN ISO 1133 |
| Parts by weight | Parts by weight | g/10min |
| 100 | 0 | 31,78±1,56 |
| 100 | 120 | 32,83±0,93 |

Both tests demonstrate that MFI of thermoplastics is not altered, or it is improved, when the particulate additive (powder composition) of the invention is used. This implies moreover that plastic contraction time is lower than the time with the pure plastic and that fusion temperatures are reduced. Reduced temperatures allow avoiding high energetic costs and in case of plastics being molded, they can be fast demolded since they are also fast cooled.

Contrary to other commercial products, which once mixed with thermoplastics oblige working at high pressures and temperatures, the additive of the invention works allowing environmentally friendly processes. This not only allows reduction of energetic costs (as will be illustrated in the Example below) but also a greater yield of productions. Indeed, any device or piece made with a plastic comprising the particulate additive (powder or granulate composition) of the invention allows fast obtaining of final ended pieces (product), since the polymeric mass is to be cooled in a minor grade than the polymeric (plastic) mass without the additive of the invention.

The particulate additive of the invention does not alter thermoplastic fluidities and, due to its volume, it creates crossing ramifications giving rise to a good dispersion in respect of other plastics additivated with only husk or other fibrous material (such as wood).

As above exposed, the particulate additive of the invention (powder or granulate) is applicable to any plastic type (being the plastic in amorphous or crystalline form in case of thermoplastics). In addition, it can be mixed with any desired plastic in the form of powder or yet in the form of granules, directly to plastic extruders or injectors. This avoids the previous processing of the material (plastic as well as particulate additive).

Example 2. Comparative energetic values of processes for producing additivated plastics.

Next points illustrate the energetic efficacy of the process of the invention for obtaining the particulate additive (in form of a powder composition) of the invention, as well as of a process in which this additive is added to a polymeric (plastic; PVC).

Currently, the processes used for obtaining plastic granules to finally get a final product are carried out by extrusion. These granules are then further extruded using particular profiling molds or they are injected in injection molds. The processes are energetically expensive because there are several steps in which raw material has to be prepared

Next system 1 shows a prior art process in which an additive for plastics is produced. On the other hand, next system 2 shows a particular embodiment of the preparation of the additive of the invention. Both systems are compared in terms of productivity, expressed as the weight of product obtained per energy unit (Kg/Kw). It is also indicated the power consumption of each system in terms of energy (Kw) per weight of product (Tones; T).

System 1. Prior art additivated plastic comprising rice husk.

It included the following steps, usually performed in the field: 1) drying of rice husk; 2) primary melting; 3) secondary melting; 4) mixture of thermoplastic and rice husk; and 5) extrusion to obtain granules and packaging.

The prior art process was performed in extruders (Buss model Quantec 129 ev www.busscorp.com) using rice husk previously dried in an horizontal dryer (tromel) to get an humidity of 4 % by weight. Then the rice husk was milled in a vertical mill Bühler and mixed with PVC (50% by weight in the total mixture) to further extrude this mixture.

Next table 3 shows the amount of material processed in each step and the energetic consumption for a production of 6500.00 Kg of additivated plastic per hour (Kg/h), commonly used as commodity or as final additive in plastic processing industries.

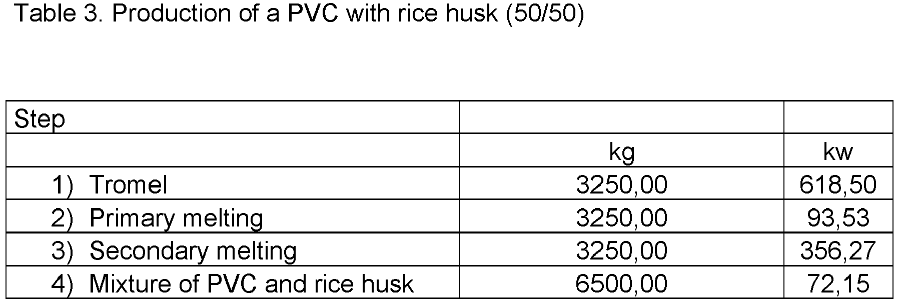

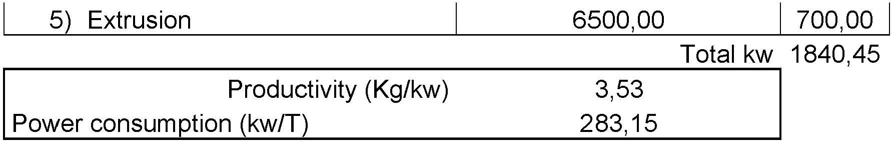

System 2. Obtention of the particulate additive of the invention in form of granules.

It included the following schematically steps: 1) mixture of rice husk (69.9 % by weight) with the resting ingredients of the additive (non-polar wax, oil with PC, glass particles, rheological agents and fillers in the proportions by weight as disclosed in (C) of Example 1); 2) granulation; 3) milling; 4) granulation; and 5) packaging.

These steps were performed using fresh rice husk from processed rice first in a granulating device (PVR T 2R from Mabrik www.mabrik.com), while introducing the rest of the ingredients of the additive; and next in a vertical mill (Bühler). After the milling step the mixture was again granulated in the PVR T granulation device.

Next table 4 shows the amount of material processed in each step and the energetic consumption for a production of 9000.00 Kg of particulate additive (Kg/h).

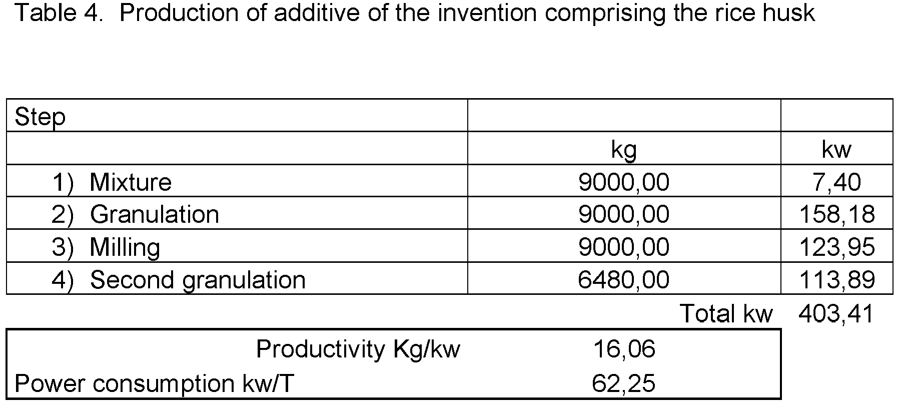

This methodology of system 2 gave real interesting productivity values and a final product with a residual humidity under 4.0 % and using only friction energy generated in each step (which produces certain heating effect). If additional recirculation steps were performed (data not shown), humidity reached a value under 2.0 %. If additional heating means are provided in the Mixture step, residual humidity of 0.4 % may be achieved.

As is directly derivable from Tables 3 and 4, the obtention of the plastic additives of prior art (yet carrying a plastic in its composition) implies a power consumption about 4.5 greater than the one for obtaining the particulate additive of the invention, which in addition is not plastic limited or that can be used for any plastic type.

Finally, next point analyses energy matters in the final manufacturer, who is going to use a plastic containing 50 % of plastic and 50 % of additives (rice husk in System 1 and the additive of the invention according to System 2). The final manufacturer will need to prepare the raw material that is going to be extruded for forming a desired profile or device. Prior to any extrusion steps drying steps are required.

System 1 gives raise to granules containing thermoplastic and rice husk. This product of system 1 implies some problems to be taken into account by the final plastic manufacturer. Firstly, humidity of the product of system 1 is comprised, generally from 4.5 % to 6.0 %. With these conditions the final user will need to dry this humidity in 100 % of the granules before mixing them with the desired plastic. Also in case of using granules containing polyethylene (which is not dried in common processes), the granules will be dried in order to avoid water bubbles in the final product.

On the other side, for obtaining the granules of system 1, melting of the plastic is required (steps 2 and 3 of Table 3). These melting steps promote the loose of plastic quality in terms of fluidity and mechanical properties, which is a drawback for the intended final use. In addition when put into contact with the husk, these high temperatures required for the melting steps may degrade vegetal fibers. All these aspects together with the fact that high pressures are required during processing imply great energy costs and a low control of working temperatures.

With the granules according to the invention, obtainable for example according to System 2, initial humidity of the product is lower than 2.0 % by weight, thus implying a difference with the granules of system 1 of at least 3.0 % of humidity. In the particular case of mixing the particulate additive of the invention with polyethylene (PE) in a mixture of 50:50 (weight percentages), the PE has not to be dried, but only the granules of the invention, which represents only 50 % of the mass and with an initial humidity under 2.0 % by weight.

In addition, the granules according to the invention are not processed previously in any melting step (see steps of System 2). This allows maintaining initial properties of the PE that is going to be mixed with the granules (particulate additive of the invention). The reason is that in System 1 the PE has been previously melt, and will be melt later to be processed in extruders or injection devices. On the contrary, using granules of system 2, allow the balance of PE being melt later and only when production processes starts and it has to be extruded or injected after additivation with the granules of the invention. At the same time energy costs are lowered in relation with the use of an additivated plastic of the prior art (System 1).

In conclusion, all these data demonstrate that not only the process for obtaining the particulate additive of the invention is advantageously over the processes for obtaining prior art plastic additives in terms of energy costs and complexity of the processes, but also the obtained product represents a real versatile commodity for plastic additivation. Moreover, working with the product of the invention in a process wherein a desired plastic is additivated also implies lower global energy costs, thus leading to more environmentally friendly and economical plastic industrial manufacturing processes. Finally, with the product and process of the invention, fiber waste material is reprocessed and acquires a real added value.

In order to facilitate comprehension and to illustrate a particular embodiment of the process for obtaining the particulate additive of the invention, next FIG. 1 shows a schematic view of the steps of the process.

Thus, husk (1) and a pool of a mixture with the resting ingredients of the additive (2) comprising non-polar wax, oil with PC, glass particles, rheological agent are introduced and mixed in mixing threads (3). The mixture of (3) is conducted to a granulation device (4) and then to a mill (5) to finally get a powder with a particle size comprised from 1 µm to 300 µm. In a tester device (7), able to detect the correct particulate size, the milled mixture is conducted to another granulation device (8) or to a compartment for processing the packaging of the powder product (9). The powder not complying with the desired particle requirements is returned by means of return conductions (6) to the initial mixing threads (3). In order to avoid oxidation, the process and equipment may be performed under controlled atmosphere, for example using inert gas injectors (10) at specific points.

With the return conductions (6) the non-complying material is granulated again in order material entering the mill (5) is always a granulate (composition in form of granules). This avoids milling problems (i.e. obstruction). In addition, the returned material from the return conductions (6) is drier than the mixture in the mixing threads (3) and in the granulation device (4). This drier material promotes the drying of the final mixture. Further, if heating means (not shown), such as electrical resistances, belt driers, or hot air injectors are disposed prior to the mixing threads and/or around the mill (5), or any of the granulation devices (4, 8).

Obviously, the process may be carried out in a continuous or discontinuous way, although continuous mode is always preferred in terms of energy and yields. Indeed, with the process as disclosed by means of FIG. 1, at least 72 % by weight of the initial material (mixture of husk and rest of additive components) is obtained with the optimal particle size and humidity requirements in a one cycle process from the mixing threads (3) to the mill (5). The rest of the material is returned.

Finally, if the final commercial product has to be in the form of granules, the mixture of the mill (5) with optimal particle size, according to the tester device (7), is conducted to the granulation device (8) to obtain the granules of the specified size.

Although not showed, the final product either in powdered form (9) or as granules (8), is usually introduced in autoclaves and further vacuum dried prior to be packaged. After the packaging another autoclave step can be (optionally) performed to assure the lowest humidity in the final product, even when the material is yet prepared in a pallet or other transporting means.

### REFERENCES CITED IN THE APPLICATION

- US2009036566
- US 6172144
- WO2012058745
- WO0042116

## Claims

1. A powder composition with a particle size comprised from 1 µm to 300 µm, and comprising a mixture of vegetal fiber, at least a non-polar wax, at least an oil comprising phosphatidylcholine, at least one rheological agent, and glass particles, wherein said glass particles are composed of a mixture of spherical and rod shape particles, wherein the percentage by weight of the vegetal fiber in respect of the total of the mixture is comprised from 50.0 % (w/w) to 98.0 % (w/w), and wherein the particle size is measured with a sieve retention method;
wherein the non-polar wax is selected from the paraffin wax, polyethylene wax, rice wax, and mixtures thereof, or from carnauba wax, honeybee wax, crystalline wax, candelilla wax, Fischer-Tropsch wax, polypropylene wax, polytetrafluoroethylene wax, amide wax, and mixtures thereof, said non-polar waxes optionally grafted with maleic anhydride; and
wherein the rheological agent is selected from the group consisting of styrene-butadiene-styrene and ethylene propylene diene monomer, or mixtures thereof, or from the group consisting of styrene-ethylene/butylene -styrene, styrene-butadiene, ethylene-propylene, polybutadiene rubber, polyisoprene, acrylonitrile butadiene rubber, hydrogenated nitrile butadiene, carboxylated styrene-butadiene rubber, styrene-butadiene block copolymer, thermoplastic polyether-ester, styrene butadiene block copolymer, styrene butadiene carboxy block copolymer, polyester urethane, polyacrylate rubber, ethylene-acrylate rubber, bromo isobutylene isoprene, chloro isobutylene isoprene, polychloroprene, chlorosulphonated polyethylene, epichlorohydrin, polyether urethane, perfluorocarbon rubber, fluoronated hydrocarbon, fluoro silicone, fluorocarbon rubber, and mixtures thereof.

2. The powder composition according to claim 1, wherein the particle size is comprised from 10 µm to 250 µm.

3. The powder composition according to any one of claims 1-2, wherein the percentage by weight of the vegetal fiber in respect of the total of the mixture is comprised from 65 % (w/w) to 70 % (w/w).

4. The powder composition according to any one of claims 1-3, wherein the vegetal fiber is cereal husk.

5. The powder composition according to claim 4, wherein the cereal husk is rice husk.

6. The powder composition according to any one of claims 1-5, wherein the percentage by weight of the non-polar wax in respect of the total weight of the composition is comprised from 0.90 % to 23.00%; the percentage by weight of the oil comprising phosphatidylcholine is comprised from 0.10% to 5.00 %; the percentage by weight of the rheological agent is comprised from 0.06 % to 1.50 %; and the percentage by weight of the glass particles is comprised from 0.30 % to 8.50 %.

7. The powder composition according to any one of claims 1-6, wherein the rheological agent is selected from the group consisting of styrene-butadiene-styrene and ethylene propylene diene monomer.

8. The powder composition according to any one of claims 1-7, further comprising a filler agent.

9. A granulate comprising the powder composition as defined in any of claims 1-8.

10. A plastic composite comprising from 3 % to 92 % by weight of the powder composition as defined in any of claims 1 to 8 or the granulate of claim 9.

11. The plastic composite according to claim 10, wherein the plastic is selected from the group consisting of polypropylene, polyethylene, polyvinylchloride, polyurethane, natural or synthetic rubber, polyphosphoesters, polyanhydrides, polycarbonates, polymethacrylate, and mixtures thereof.

12. A process for preparing a powder composition as defined in any of claims 1 to 8, wherein the process comprises the following steps:
(a) mixing vegetal fiber with at least a non-polar wax, at least an oil comprising phosphatidylcholine , at least one rheological agent, and glass particles, wherein said glass particles are composed of a mixture of spherical and rod shape particles, and wherein the percentage by weight of the vegetal fiber in respect of the total of the mixture is comprised from 50.0 % (w/w) to 98.0 % (w/w);
(b) agitating the mixture; and
(c) granulating and milling the mixture to obtain a powder with a particle size comprised from 1 µm to 300 µm, wherein the particle size is measured with a sieve retention method,
wherein the non-polar wax is selected from the paraffin wax, polyethylene wax, rice wax, and mixtures thereof, or from carnauba wax, honeybee wax, crystalline wax, candelilla wax, Fischer-Tropsch wax, polypropylene wax, polytetrafluoroethylene wax, amide wax, and mixtures thereof, said non-polar waxes optionally grafted with maleic anhydride; and
wherein the rheological agent is selected from the group consisting of styrene-butadiene-styrene and ethylene propylene diene monomer, or mixtures thereof, or from the group consisting of styrene-ethylene/butylene -styrene, styrene-butadiene, ethylene-propylene, polybutadiene rubber, polyisoprene, acrylonitrile butadiene rubber, hydrogenated nitrile butadiene, carboxylated styrene-butadiene rubber, styrene-butadiene block copolymer, thermoplastic polyether-ester, styrene butadiene block copolymer, styrene butadiene carboxy block copolymer, polyester urethane, polyacrylate rubber, ethylene-acrylate rubber, bromo isobutylene isoprene, chloro isobutylene isoprene, polychloroprene, chlorosulphonated polyethylene, epichlorohydrin, polyether urethane, perfluorocarbon rubber, fluoronated hydrocarbon, fluoro silicone, fluorocarbon rubber, and mixtures thereof.

13. The process according to claim 12, further comprising the step of (d) recycling part of the powder obtained in step (c) and introducing it in step (a).

14. The process according to any of claims 12-13, wherein part or total of the powder of step (c) is submitted to a further granulation step, to yield a granulate as defined in claim 9.

15. A process for preparing a plastic composite comprising from 3 % to 92 % by weight of the powder composition as defined in any of claims 1 to 8 or of the granulate of claim 9, said process comprising carrying out the process as defined in any of claims 12 to 13, or as defined in claim 14; and further mixing the balance of plastic.

16. Use of the powder composition as defined in any of claims 1 to 8, or of the granulate of claim 9, as additive for plastics

## Patentansprüche

1. Eine Pulverzusammensetzung mit einer Partikelgröße, die von 1 µm bis 300 µm reicht, und umfassend eine Mischung aus Pflanzenfaser, mindestens einem unpolaren Wachs, mindestens einem Öl, das Phosphatidylcholin umfasst, mindestens einem rheologisches Mittel und Glaspartikeln, wobei die Glaspartikeln aus einer Mischung aus kugelförmigen und stabförmigen Partikeln zusammengesetzt sind, wobei der Gewichtsprozentsatz der Pflanzenfaser in Bezug auf die Gesamtheit der Mischung von 50,0 % (Gew./Gew.) bis 98,0 % (Gew./Gew.) reicht und wobei die Partikelgröße mit einem Siebrückhalteverfahren gemessen wird;
wobei das unpolare Wachs ausgewählt ist aus dem Paraffinwachs, Polyethylenwachs, Reiswachs und Mischungen davon, oder aus Carnaubawachs, Honigbienenwachs, kristallinem Wachs, Candelillawachs, Fischer-Tropsch-Wachs, Polypropylenwachs, Polytetrafluorethylenwachs, Amidwachs und Mischungen davon, wobei die unpolaren Wachse gegebenenfalls mit Maleinsäureanhydrid gepfropft sind; und
wobei das rheologische Mittel ausgewählt ist aus der Gruppe bestehend aus Styrol-Butadien-Styrol und Ethylen-Propylen-Dien-Monomer, oder Mischungen davon, oder aus der Gruppe bestehend aus Styrol-Ethylen/Butylen-Styrol, Styrol-Butadien, Ethylen-Propylen, Polybutadien-Kautschuk, Polyisopren, Acrylnitril-Butadien-Kautschuk, hydriertem Nitril-Butadien, carboxyliertem Styrol-Butadien-Kautschuk, Styrol-Butadien-Blockcopolymer, thermoplastischem Polyether-Ester, Styrol-Butadien-Blockcopolymer, Styrol-Butadien-Carboxy-Blockcopolymer, Polyesterurethan, Polyacrylat-Kautschuk, Ethylen-Acrylat-Kautschuk, Bromisobutylen-Isopren, Chlorisobutylen-Isopren, Polychloropren, chlorsulfoniertem Polyethylen, Epichlorhydrin, Polyetherurethan, Perfluorkohlenstoff-Kautschuk, fluoriertem Kohlenwasserstoff, Fluorsilikon, Fluorkohlenstoff-Kautschuk und Mischungen davon.

2. Die Pulverzusammensetzung nach Anspruch 1, wobei die Partikelgröße von 10 µm bis 250 µm reicht.

3. Die Pulverzusammensetzung nach einem der Ansprüche 1-2, wobei der Gewichtsprozentsatz der Pflanzenfaser in Bezug auf die Gesamtheit der Mischung von 65 % (Gew./Gew.) bis 70 % (Gew./Gew.) reicht.

4. Die Pulverzusammensetzung nach einem der Ansprüche 1 bis 3, wobei die Pflanzenfaser eine Getreideschale ist.

5. Die Pulverzusammensetzung nach Anspruch 4, wobei die Getreideschale eine Reisschale ist.

6. Die Pulverzusammensetzung nach einem der Ansprüche 1 bis 5, wobei der Gewichtsprozentsatz des unpolaren Wachses in Bezug auf das Gesamtgewicht der Zusammensetzung von 0,90 % bis 23,00 % reicht; der Gewichtsprozentsatz des Phosphatidylcholin umfassenden Öls von 0,10 % bis 5,00 % reicht; der Gewichtsprozentsatz des rheologischen Mittels von 0,06 % bis 1,50 % reicht; und der Gewichtsprozentsatz der Glaspartikeln von 0,30 % bis 8,50 % reicht.

7. Die Pulverzusammensetzung nach einem der Ansprüche 1 bis 6, wobei das rheologische Mittel ausgewählt ist aus der Gruppe bestehend aus Styrol-Butadien-Styrol und Ethylen-Propylen-Dien-Monomer.

8. Die Pulverzusammensetzung nach einem der Ansprüche 1 bis 7, weiterhin umfassend ein Füllmittel.

9. Ein Granulat umfassend die Pulverzusammensetzung wie in einem der Ansprüche 1 bis 8 definiert.

10. Ein Kunststoffverbundstoff umfassend von 3 % bis 92 Gew.-% der Pulverzusammensetzung wie in einem der Ansprüche 1 bis 8 definiert oder des Granulats von Anspruch 9.

11. Der Kunststoffverbundstoff nach Anspruch 10, wobei der Kunststoff ausgewählt ist aus der Gruppe bestehend aus Polypropylen, Polyethylen, Polyvinylchlorid, Polyurethan, natürlichem oder synthetischem Kautschuk, Polyphosphoestern, Polyanhydriden, Polycarbonaten, Polymethacrylat und Mischungen davon.

12. Ein Verfahren zur Herstellung einer Pulverzusammensetzung wie in einem der Ansprüche 1 bis 8 definiert, wobei das Verfahren die folgenden Schritte umfasst:
(a) Mischen von Pflanzenfaser mit mindestens einem unpolaren Wachs, mindestens einem Phosphatidylcholin umfassenden Öl, mindestens einem rheologischen Mittel und Glaspartikeln, wobei die Glaspartikeln aus einer Mischung von sphärischen und stabförmigen Partikeln zusammengesetzt sind, und wobei der Gewichtsprozentsatz der Pflanzenfaser in Bezug auf die Gesamtheit der Mischung von 50,0 % (Gew./Gew.) bis 98,0 % (Gew./Gew.) reicht;
(b) Rühren der Mischung; und
(c) Granulieren und Mahlen der Mischung, um ein Pulver mit einer Partikelgröße zu erhalten, die von 1 µm bis 300 µm reicht, wobei die Partikelgröße mit einem Siebrückhalteverfahren gemessen wird,
wobei das unpolare Wachs ausgewählt ist aus dem Paraffinwachs, Polyethylenwachs, Reiswachs und Mischungen davon, oder aus Carnaubawachs, Honigbienenwachs, kristallinem Wachs, Candelillawachs, Fischer-Tropsch-Wachs, Polypropylenwachs, Polytetrafluorethylenwachs, Amidwachs und Mischungen davon, wobei die unpolaren Wachse gegebenenfalls mit Maleinsäureanhydrid gepfropft sind; und
wobei das rheologische Mittel ausgewählt ist aus der Gruppe bestehend aus Styrol-Butadien-Styrol und Ethylen-Propylen-Dien-Monomer, oder Mischungen davon, oder aus der Gruppe bestehend aus Styrol-Ethylen/Butylen-Styrol, Styrol-Butadien, Ethylen-Propylen, Polybutadien-Kautschuk, Polyisopren, Acrylnitril-Butadien-Kautschuk, hydriertem Nitril-Butadien, carboxyliertem Styrol-Butadien-Kautschuk, Styrol-Butadien-Blockcopolymer, thermoplastischem Polyether-Ester, Styrol-Butadien-Blockcopolymer, Styrol-Butadien-Carboxy-Blockcopolymer, Polyesterurethan, Polyacrylat-Kautschuk, Ethylen-Acrylat-Kautschuk, Bromisobutylen-Isopren, Chlorisobutylen-Isopren, Polychloropren, chlorsulfoniertem Polyethylen, Epichlorhydrin, Polyetherurethan, Perfluorkohlenstoff-Kautschuk, fluoriertem Kohlenwasserstoff, Fluorsilikon, Fluorkohlenstoff-Kautschuk und Mischungen davon.

13. Das Verfahren nach Anspruch 12, weiterhin umfassend den Schritt (d) des Rückführens eines Teils des in Schritt (c) erhaltenen Pulvers und des Einführens desselben in Schritt (a).

14. Das Verfahren nach einem der Ansprüche 12 bis 13, wobei ein Teil oder die Gesamtheit des Pulvers von Schritt (c) einem weiteren Granulierungsschritt unterzogen wird, um ein Granulat wie in Anspruch 9 definiert zu erhalten.

15. Ein Verfahren zur Herstellung eines Kunststoffverbundstoffs, umfassend von 3 bis 92 Gew.- % der Pulverzusammensetzung wie in einem der Ansprüche 1 bis 8 definiert oder des Granulats von Anspruch 9, wobei das Verfahren die Durchführung des Verfahrens wie in einem der Ansprüche 12 bis 13 definiert, oder wie in Anspruch 14 definiert umfasst; und das weitere Mischen des Restes an Kunststoff.

16. Verwendung der Pulverzusammensetzung wie in einem der Ansprüche 1 bis 8 definiert, oder des Granulats von Anspruch 9, als Additiv für Kunststoffe.

## Revendications

1. Une composition en poudre ayant une taille des particules comprise de 1 µm à 300 µm, et comprenant un mélange de fibres végétales, au moins une cire non polaire, au moins une huile comprenant de la phosphatidylcholine, au moins un agent rhéologique, et des particules de verre, dans laquelle lesdites particules de verre sont composées d'un mélange de particules sphériques et en forme de tige, dans laquelle le pourcentage en poids de la fibre végétale par rapport au total du mélange est compris de 50,0 % (p/p) à 98,0 % (p/p), et dans laquelle la taille des particules est mesurée avec un procédé de rétention de tamis ;
dans laquelle la cire non polaire est choisie parmi la cire de paraffine, la cire de polyéthylène, la cire de riz, et des mélanges de celles-ci, ou parmi la cire de carnauba, la cire d'abeille, la cire cristalline, la cire de candelilla, la cire de Fischer-Tropsch, la cire de polypropylène, la cire de polytétrafluoroéthylène, la cire d'amide, et des mélanges de celles-ci, lesdites cires non polaires étant facultativement greffées avec de l'anhydride maléique ; et
dans lequel l'agent rhéologique est choisi dans le groupe constitué par le monomère styrène-butadiène-styrène et éthylène-propylène-diène, ou des mélanges de ceux-ci, ou dans le groupe constitué par le styrène-éthylène/butylène-styrène, le styrène-butadiène, l'éthylène-propylène, le caoutchouc de polybutadiène, le polyisoprène, le caoutchouc d'acrylonitrile-butadiène, le nitrile-butadiène hydrogéné, le caoutchouc de styrène-butadiène carboxylé, le copolymère bloc de styrène-butadiène, le polyéther-ester thermoplastique, le copolymère bloc de styrène-butadiène, le copolymère bloc de styrène-butadiène-carboxy, le polyester-uréthane, le caoutchouc de polyacrylate, le caoutchouc d'éthylène-acrylate, le bromo-isobutylène isoprène, le chloro-isobutylène-isoprène, le polychloroprène, le polyéthylène chlorosulfoné, l'épichlorhydrine, le polyéther-uréthane, le caoutchouc de perfluorocarbone, un hydrocarbure fluoré, une silicone fluorée, un caoutchouc de fluorocarbone, et des mélanges de ceux-ci.

2. La composition en poudre selon la revendication 1, dans laquelle la taille des particules est comprise de 10 µm à 250 µm.

3. La composition en poudre selon l'une quelconque des revendications 1 à 2, dans laquelle le pourcentage en poids de la fibre végétale par rapport au total du mélange est compris de 65 % (p/p) à 70 % (p/p).

4. La composition en poudre selon l'une quelconque des revendications 1 à 3, dans laquelle la fibre végétale est une enveloppe de céréale.

5. La composition en poudre selon la revendication 4, dans laquelle l'enveloppe de céréale est une enveloppe de riz.

6. La composition en poudre selon l'une quelconque des revendications 1 à 5, dans laquelle le pourcentage en poids de la cire non polaire par rapport au poids total de la composition est compris de 0,90 % à 23,00 % ; le pourcentage en poids de l'huile comprenant de la phosphatidylcholine est compris de 0,10 % à 5,00 % ; le pourcentage en poids de l'agent rhéologique est compris de 0,06 % à 1,50 % ; et le pourcentage en poids des particules de verre est compris de 0,30 % à 8,50 %.

7. La composition en poudre selon l'une quelconque des revendications 1 à 6, dans laquelle l'agent rhéologique est choisi dans le groupe constitué par le styrène-butadiène-styrène et le monomère d'éthylène-propylène-diène.

8. La composition en poudre selon l'une quelconque des revendications 1 à 7, comprenant en outre un agent de charge.

9. Un granulé comprenant la composition en poudre telle que définie dans l'une quelconque des revendications 1 à 8.

10. Un composite de matière plastique comprenant de 3 % à 92 % en poids de la composition en poudre telle que définie dans l'une quelconque des revendications 1 à 8 ou le granulé de la revendication 9.

11. Le composite de matière plastique selon la revendication 10, dans lequel la matière plastique est choisie dans le groupe constitué par le polypropylène, le polyéthylène, le chlorure de polyvinyle, le polyuréthane, le caoutchouc naturel ou synthétique, les polyphosphoesters, les polyanhydrides, les polycarbonates, le polyméthacrylate et des mélanges de ceux-ci.

12. Un procédé de préparation d'une composition en poudre telle que définie dans l'une quelconque des revendications 1 à 8, dans lequel le procédé comprend les étapes suivantes :
(a) mélanger de la fibre végétale avec au moins une cire non polaire, au moins une huile comprenant de la phosphatidylcholine, au moins un agent rhéologique et des particules de verre, dans lequel lesdites particules de verre sont composées d'un mélange de particules sphériques et en forme de tige, et dans lequel le pourcentage en poids de la fibre végétale par rapport au total du mélange est compris de 50,0 % (p/p) à 98,0 % (p/p) ;
(b) agiter le mélange ; et
(c) granuler et moudre le mélange pour obtenir une poudre avec une taille des particules comprise de 1 µm à 300 µm, dans laquelle la taille des particules est mesurée avec un procédé de rétention de tamis,
dans laquelle la cire non polaire est choisie parmi la cire de paraffine, la cire de polyéthylène, la cire de riz, et des mélanges de celles-ci, ou parmi la cire de carnauba, la cire d'abeille, la cire cristalline, la cire de candelilla, la cire de Fischer-Tropsch, la cire de polypropylène, la cire de polytétrafluoroéthylène, la cire d'amide, et des mélanges de celles-ci, lesdites cires non polaires étant facultativement greffées avec de l'anhydride maléique ; et
dans lequel l'agent rhéologique est choisi dans le groupe constitué par le monomère styrène-butadiène-styrène et éthylène-propylène-diène, ou des mélanges de ceux-ci, ou dans le groupe constitué par le styrène-éthylène/butylène-styrène, le styrène-butadiène, l'éthylène-propylène, le caoutchouc de polybutadiène, le polyisoprène, le caoutchouc d'acrylonitrile-butadiène, le nitrile-butadiène hydrogéné, le caoutchouc de styrène-butadiène carboxylé, le copolymère bloc de styrène-butadiène, le polyéther-ester thermoplastique, le copolymère bloc de styrène-butadiène, le copolymère bloc de styrène-butadiène-carboxy, le polyester-uréthane, le caoutchouc de polyacrylate, le caoutchouc d'éthylène-acrylate, le bromo-isobutylène isoprène, le chloro-isobutylène-isoprène, le polychloroprène, le polyéthylène chlorosulfoné, l'épichlorhydrine, le polyéther-uréthane, le caoutchouc de perfluorocarbone, un hydrocarbure fluoré, une silicone fluorée, un caoutchouc de fluorocarbone, et des mélanges de ceux-ci.

13. Le procédé selon la revendication 12, comprenant en outre l'étape de (d) recycler une partie de la poudre obtenue à l'étape (c) et de l'introduire à l'étape (a).

14. Le procédé selon l'une quelconque des revendications 12 à 13, dans lequel une partie ou la totalité de la poudre de l'étape (c) est soumise à une étape de granulation supplémentaire, pour donner un granulé tel que défini dans la revendication 9.

15. Un procédé pour préparer un composite de matière plastique comprenant de 3 % à 92 % en poids de la composition en poudre telle que définie dans l'une quelconque des revendications 1 à 8 ou du granulé de la revendication 9, ledit procédé comprenant la mise en oeuvre du procédé tel que défini dans l'une quelconque des revendications 12 à 13, ou tel que défini dans la revendication 14 ; et en outre le mélange du reste de matière plastique.

16. Utilisation de la composition en poudre telle que définie dans l'une quelconque des revendications 1 à 8, ou du granulé de la revendication 9, en tant qu'additif pour des matières plastiques.
